# EUROPÄISCHE PATENTANMELDUNG

(11) **EP 3 335 973 A1**
(43) Veröffentlichungstag der Anmeldung: **20.06.2018**
(21) Anmeldenummer: 17203970.3
(22) Anmeldetag: 28.11.2017
(51) Int. Cl.: B62K 19/30

(54) **FAHRZEUGTEIL**

(30) Priorität: 06.12.2016 DE 102016123577
(71) Anmelder: Brake Force One GmbH, 72074 Tübingen (DE)
(72) Erfinder: VOITL, Peter, 75179 Pforzheim (DE)
(74) Vertreter: Kohler Schmid Möbus Patentanwälte

(57) **Zusammenfassung**

Die Erfindung betrifft ein Fahrzeugteil (1), in das ein elektrischer Leiter (3, 4) integriert ist, wobei der elektrische Leiter (3, 4) in dem Material des Fahrzeugteils angeordnet ist oder das Fahrzeugteil (1) einen Tragkörper (2) aufweist und der elektrische Leiter (3, 4) zwischen dem Tragkörper (2) und einer Deckschicht (5) oder in der Deckschicht (5) angeordnet ist.

## Beschreibung

Die Erfindung betrifft ein Fahrzeugteil eines Fahrzeugs.

Lenker für Fahrzeuge, insbesondere Einspurfahrzeuge, sind üblicherweise als einfache ein- oder zweiteilige Rohrkonstruktionen ausgeführt, die in erster Linie dazu bestimmt sind, das Fahrzeug zu lenken und die typischen Bedienelemente ergonomisch gerecht zu tragen. Dabei werden die zu den Bedien- und Anzeigeelementen gehörenden Anschlüsse (Kabel, Hydraulikleitungen und mechanische Drahtzüge) außerhalb des Lenkers an die Bedienelemente herangeführt.

Durch die steigende Anzahl an elektronischen Bedienelementen werden neben den bisher üblichen mechanischen und hydraulischen Anschlüssen auch immer mehr elektrische Anschlüsse benötigt, wodurch es zu einer optischen und funktionellen Überfrachtung des Lenkers kommt, was mit den Ansprüchen von modernem Design schwer in Einklang zu bringen ist. Außerdem sind außerhalb des Lenkers geführte Leitungen grundsätzlich anfällig für mechanische Beschädigungen.

Aufgabe der vorliegenden Erfindung ist es daher, ein Fahrzeugteil, insbesondere einen Lenker bereitzustellen, bei dem die oben genannten Nachteile nicht auftreten.

Gelöst wird diese Aufgabe erfindungsgemäß durch ein Fahrzeugteil, in das ein elektrischer Leiter integriert ist, wobei der elektrische Leiter in dem Material des Fahrzeugteils angeordnet ist oder das Fahrzeugteil einen Tragkörper aufweist und der elektrische Leiter zwischen dem Tragkörper und einer Deckschicht oder in der Deckschicht angeordnet ist.

Bei dem erfindungsgemäßen Fahrzeugteil, bei dem es sich vorzugsweise um ein tragendes bzw. selbsttragendes Fahrzeugteil handelt, ist somit der elektrische Leiter geschützt angeordnet. Es verlaufen keine elektrischen Leiter außerhalb des Fahrzeugteils parallel zu diesem. Somit ergibt sich auch ein ansprechenderes Design für das Fahrzeugteil.

Der elektrische Leiter kann an zumindest einer Stelle an die Oberfläche des Fahrzeugteils geführt sein. Dadurch ist es möglich, den elektrischen Leiter an der Oberfläche des Fahrzeugteils zu kontaktieren und ein elektronisches Bauelement an den elektrischen Leiter anzuschließen. Beispielsweise kann der elektrische Leiter an der Stelle an die Oberfläche des Fahrzeugteils geführt sein, an der ein elektronisches Bauelement, z. B. ein Bedienelement, angeordnet werden soll. Außerdem ist es denkbar, dass der elektrische Leiter an der Stelle des Fahrzeugteils an dessen Oberfläche geführt ist, an der das Fahrzeugteil mit einem anderen Fahrzeugteil verbunden werden soll. Insbesondere kann der elektrische Leiter an einer Verbindungsstelle des Fahrzeugteils zum übrigen Fahrzeug vorgesehen sein. Somit kann beispielsweise eine elektrische Verbindung zu einer Energieversorgung oder zu einer Steuerung, aber auch zu Elementen, die durch das am Fahrzeugteil angeordnete Bauelement, wie beispielsweise ein Bedienelement, angesteuert werden sollen, hergestellt werden.

An der Oberfläche des Fahrzeugteils kann ein elektrisches Anschlussstück angeordnet sein, zu dem der Leiter führt. Dadurch kann die Verbindung zu einem Anzeigeelement oder einem Bedienelement, welches am Fahrzeugteil angeordnet ist, auf besonders einfache Art und Weise erfolgen.

An dem Fahrzeugteil kann ein elektrisches Bauelement angeordnet sein, das den elektrischen Leiter durch das Material des Fahrzeugteils oder die Deckschicht hindurch elektrisch kontaktiert. Beispielsweise kann an dem elektrischen Bauelement eine Schraube angeordnet sein, die in das Fahrzeugteil eingeschraubt wird, bis die Schraube den elektrischen Leiter kontaktiert, um so eine elektrische Verbindung herzustellen.

Das Material des Fahrzeugteils und/oder der Tragkörper und/oder die Deckschicht kann aus einem Faserverbundwerkstoff ausgebildet sein. In ein solches Material kann der elektrische Leiter besonders gut und einfach integriert werden. Durch die Verwendung eines Faserverbundwerkstoffs kann das Fahrzeugteil mit geringem Gewicht ausgebildet werden.

Außerdem kann ein sehr stabiles Fahrzeugteil hergestellt werden. Denkbar ist es dabei auch, dass als Tragkörper ein Metallkörper vorgesehen ist, auf dem eine Deckschicht aus Faserverbundwerkstoff aufgebracht ist.
Der elektrische Leiter kann als Leiterbahn ausgebildet sein. Die elektrische Isolierung des elektrischen Leiters kann dabei über die Deckschicht und/oder das Material des Fahrzeugteils erfolgen, die dann selbst als Isolator ausgebildet sind.

Weiterhin kann vorgesehen sein, dass der elektrische Leiter eine isolierende Ummantelung aufweist. Insbesondere kann der elektrische Leiter Bestandteil eines Kabels sein.

Gemäß einer Weiterbildung kann vorgesehen sein, dass die Ummantelung eine Temperaturbeständigkeit von mindestens 70 °C, vorzugsweise mindestens 80 °C, aufweist. Somit ist die Ummantelung dafür geeignet, den Verarbeitungsprozessen von beispielsweise einem Faserverbundwerkstoff, standzuhalten, ohne dass die isolierenden Eigenschaften der Ummantelung verloren gehen.

Der elektrische Leiter kann weiterhin als Ader einer mehradrigen elektrischen Leitung ausgebildet sein. Dabei können die Adern der mehradrigen elektrischen Leitung in einem elektrisch isolierenden Körper angeordnet sein. Somit können Kurzschlüsse vermieden werden.

Besondere Vorteile ergeben sich, wenn das Fahrzeugteil ein Teil eines Einspurfahrzeugs ist. Beispielsweise kann das Fahrzeugteil der Lenker eines Zweirads, insbesondere eines Fahrrads, sein. Weiterhin ist es denkbar, dass das Fahrzeugteil Bestandteil eines Rahmens eines Einspurfahrzeugs ist.

Weiterhin ist es denkbar, dass das Fahrzeugteil als Lenker, insbesondere Cockpit-Lenker, ausgebildet ist. Bei einem solchen Cockpit-Lenker würden außen verlaufende elektrische Leitungen besonders störend wirken. Somit kommt die Erfindung insbesondere bei einem solchen Fahrzeugteil vorteilhaft zum Tragen.

Das Fahrzeugteil und/oder der Tragkörper können als Hohlkörper, insbesondere rohrförmig, ausgebildet sein. Somit kann das Fahrzeugteil mit geringem Gewicht hergestellt werden. Außerdem ist es möglich, in dem Hohlkörper noch weitere Leitungen, wie beispielsweise Hydraulikleitungen zu führen.

Weitere Merkmale und Vorteile der Erfindung ergeben sich aus der nachfolgenden detaillierten Beschreibung eines Ausführungsbeispiels der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung ist ein Ausführungsbeispiel der Erfindung dargestellt und in der nachfolgenden Beschreibung näher erläutert.

Es zeigen:
- Fig. 1: eine perspektivische Ansicht eines erfindungsgemäßen Fahrzeugteils;
- Fig. 2: eine Querschnittsdarstellung des Fahrzeugteils.

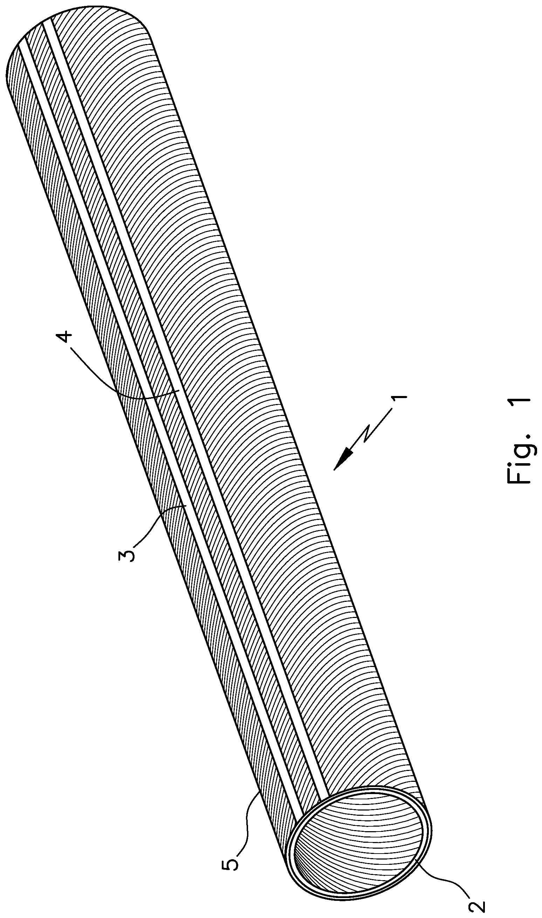

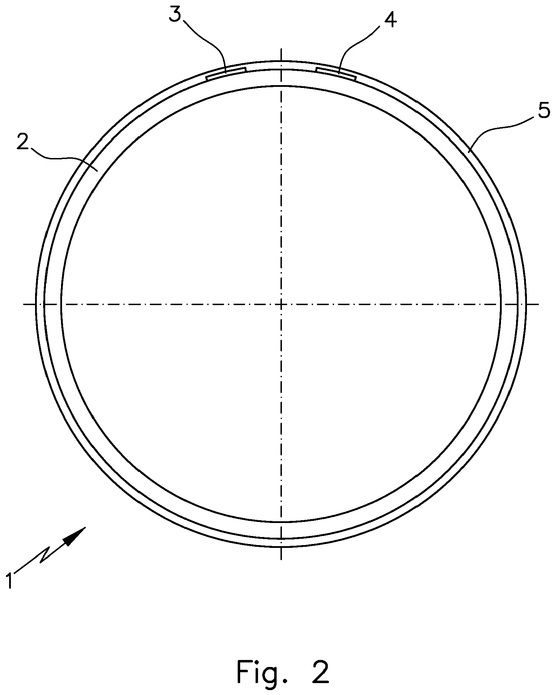

Die Fig. 1 zeigt ein als Lenker ausgebildetes Fahrzeugteil 1, welches einen Tragkörper 2 aufweist. Im dargestellten Ausführungsbeispiel ist der Tragkörper 2 aus Karbon ausgebildet. Auf dem Tragkörper sind als Leiterbahn ausgebildete elektrische Leiter 3, 4 angeordnet, die sich im vorliegenden Fall parallel zur Längsrichtung des Fahrzeugteils 1 erstrecken. Sie sind voneinander beabstandet. Die elektrischen Leiter 3, 4 sind durch eine Deckschicht, im vorliegenden Fall Klarlack, abgedeckt und somit vor äußeren Einflüssen geschützt und elektrisch isoliert angeordnet. Der Schnittdarstellung der Fig. 2 lässt sich entnehmen, dass der Tragkörper 2 hohl ausgebildet ist. Auf ihm sind die elektrischen Leiter 3, 4 angeordnet, die durch die Deckschicht 5 abgedeckt sind. Im vorliegenden Fall ist das Fahrzeugteil bzw. der Tragkörper 2 rohrförmig ausgebildet.

## Patentansprüche

1. Fahrzeugteil (1), in das ein elektrischer Leiter (3, 4) integriert ist, wobei der elektrische Leiter (3, 4) in dem Material des Fahrzeugteils angeordnet ist oder das Fahrzeugteil (1) einen Tragkörper (2) aufweist und der elektrische Leiter (3, 4) zwischen dem Tragkörper (2) und einer Deckschicht (5) oder in der Deckschicht (5) angeordnet ist.

2. Fahrzeugteil nach Anspruch 1, **dadurch gekennzeichnet, dass** der elektrische Leiter (3, 4) an zumindest einer Stelle an die Oberfläche des Fahrzeugteils (1) geführt ist.

3. Fahrzeugteil nach Anspruch 2, **dadurch gekennzeichnet, dass** an der Oberfläche des Fahrzeugteils (1) ein elektrisches Anschlussstück angeordnet ist, zu dem der Leiter (3, 4) führt.

4. Fahrzeugteil nach einem der vorhergehenden Ansprüche, **dadurch gekennzeichnet, dass** an dem Fahrzeugteil (1) ein elektrisches Bauelement angeordnet ist, das den elektrischen Leiter (3, 4) durch das Material des Fahrzeugteils (1) oder durch die Deckschicht (5) hindurch elektrisch kontaktiert.

5. Fahrzeugteil nach einem der vorhergehenden Ansprüche, **dadurch gekennzeichnet, dass** das Material des Fahrzeugteils (1) und/oder der Tragkörper (2) und/oder die Deckschicht (5) aus einen Faserverbundwerkstoff ausgebildet ist.

6. Fahrzeugteil nach einem der vorhergehenden Ansprüche, **dadurch gekennzeichnet, dass** der elektrische Leiter (3, 4) als Leiterbahn ausgebildet ist

7. Fahrzeugteil nach einem der vorhergehenden Ansprüche, **dadurch gekennzeichnet, dass** der elektrische Leiter (3, 4) eine isolierende Ummantelung aufweist.

8. Fahrzeugteil nach Anspruch 7, **dadurch gekennzeichnet, dass** die Ummantelung eine Temperaturbeständigkeit von mindestens 70 °C, vorzugsweise mindestens 80 °C, aufweist.

9. Fahrzeugteil nach einem der vorhergehenden Ansprüche, **dadurch gekennzeichnet, dass** der elektrische Leiter (3, 4) als Ader einer mehradrigen elektrischen Leitung ausgebildet ist.

10. Fahrzeugteil nach Anspruch 9, **dadurch gekennzeichnet, dass** die Adern der mehradrigen elektrischen Leitung in einem elektrisch isolierenden Köper angeordnet sind.

11. Fahrzeugteil nach einem der vorhergehenden Ansprüche, **dadurch gekennzeichnet, dass** es als Fahrzeugteil (1) eines Einspurfahrzeugs ausgebildet ist.

12. Fahrzeugteil nach einem der vorhergehenden Ansprüche, **dadurch gekennzeichnet, dass** es als Lenker, insbesondere Cockpit-Lenker, ausgebildet ist.

13. Fahrzeugteil nach einem der vorhergehenden Ansprüche, **dadurch gekennzeichnet, dass** es und/oder der Tragkörper (2) als Hohlkörper, insbesondere rohrförmig, ausgebildet ist.
